# FASCICULE DE BREVET EUROPEEN

(11) **EP 2 717 981 B1**
(45) Date de publication et mention de la délivrance du brevet: **07.01.2015**
(21) Numéro de dépôt: 12730412.9
(22) Date de dépôt: 08.06.2012
(51) Int. Cl.: A63C 19/06, F16B 7/04

(54) **STRUCTURE TRIDIMENSIONNELLE AVEC CONNECTEURS A BRANCHES FLEXIBLES**
DREIDIMENSIONALE STRUKTUR MIT VERBINDERN MIT FLEXIBLEN VERZWEIGUNGEN
THREE-DIMENSIONAL STRUCTURE WITH CONNECTORS HAVING FLEXIBLE BRANCHES

(30) Priorité: 08.06.2011 FR 1101741; 24.04.2012 EP 12165411
(43) Date de publication de la demande: 16.04.2014
(73) Titulaire: Métal & Plastic SA, 01100 Oyonnax (FR)
(72) Inventeur: COUTTY, Jean Philippe, F-01130 Le Poizat (FR); CORAL, Hilaire, F-01100 Oyonnax (FR)
(74) Mandataire: Gaglione, Renaud
(86) Numéro de dépôt international: PCT/EP2012/060842
(87) Numéro de publication internationale: WO 2012/168393

(56) Documents cités:
- WO-A1-01/95299
- CH-A5- 613 741
- GB-A- 2 467 521
- US-A- 5 863 030
- US-A1- 2001 000 717
- US-B1- 7 014 267

## Description

L'invention se rapporte à une structure tridimensionnelle, comprenant plus particulièrement N tubes ou barres connectés par des connecteurs comprenant chacun trois moyens de connexion rigides tenus par une base et réalisant au total un nombre de connexions égal à 2N.

Une telle structure est connue notamment du document CH 613 741. Un nombre de connexions égal au double du nombre de tubes permet de fermer la structure tubulaire tridimensionnelle pour la rendre autoporteuse. Le connecteur est fabriqué dans un matériau thermoplastique du type polyamide. Il comprend entre trois et cinq moyens de connexion rigides tenus par une même base centrale. Plusieurs sortes de connecteurs sont nécessaires pour élever des parallélépipèdes ou des prismes dans la structure.

Le document US 4 369 000 divulgue un connecteur conçu pour élever une structure tridimensionnelle, par exemple un support publicitaire, sans recourir à d'autres sortes de connecteurs. Le connecteur est fabriqué par moulage d'un matériau thermoplastique du type polypropylène, polystyrène, fluorure ou chlorure de polyvynilidène. Il comprend quatre moyens de connexion profilés en H et tenus par un même pont central. Deux zones de moindre épaisseur assurent un fléchissement élastique de deux des moyens de connexion par rapport au pont. Les deux autres moyens de connexion s'étendent de part en part du pont. Le connecteur s'adapte à différents coudes ou différents angles tout en offrant des connexions suffisamment rigides pour tenir fermement avec les tubes.

Les structures tridimensionnelles dont l'état de la technique vient d'être indiqué souffrent d'être insuffisamment déformables. Cet inconvénient pèse plus particulièrement dans le cas où la structure tridimensionnelle est utilisée comme barrière autoporteuse, avec une fonction complémentaire de support publicitaire. Il est en effet souhaitable que la structure puisse se déformer si une personne vient à tomber dessus après avoir perdu l'équilibre. Pour autant, les moyens de connexion doivent rester rigides pour tenir fermement aux tubes.

Le but de l'invention est de modifier une structure tridimensionnelle dont l'état de la technique vient d'être indiqué pour lui conférer une plus grande déformabilité.

A cet effet, l'invention a pour objet une structure tridimensionnelle comprenant N tubes ou barres connectés par des connecteurs comprenant chacun trois moyens de connexion rigides tenus par une base et réalisant au total un nombre de connexions égal à 2N, caractérisée en ce que la base forme une pièce d'un seul tenant en matériau élastomère et comprend trois doigts auxquels les trois moyens de connexion rigides sont fixés et en ce que chaque connecteur tend à minimiser une déformation en flexion des doigts de la base en tenant compte de tous les connecteurs agissant les uns sur les autres par l'intermédiaire des N tubes connectés par des moyens de retenue en prise avec les moyens de connexion rigides.

La structure tridimensionnelle ainsi définie possède un état dit d'équilibre, par rapport auquel elle peut se déformer. Les doigts de chaque connecteur assurent un retour élastique dans l'état d'équilibre par la minimisation de leur déformation en flexion compte tenu de l'action mutuelle des connecteurs par l'intermédiaire des N tubes ou barres.

Dans un mode particulier de réalisation, chaque connecteur comprend un quatrième moyen de connexion rigide fixé à un quatrième doigt de la base et chaque connecteur tend à minimiser une déformation en flexion des quatre doigts en tenant compte de tous les connecteurs agissant les uns sur les autres par l'intermédiaire des N tubes ou barres auxquels ils sont connectés par les moyens de connexion rigides.

La stabilité de l'état d'équilibre dépend de la position relative des trois doigts des connecteurs. La déformation en flexion des doigts des connecteurs peut être minimale par rapport à un état de repos de chaque connecteur pour lequel les trois ou quatre doigts sont coplanaires. Des doigts coplanaires favorisent la stabilité et la rapidité du retour à l'état d'équilibre. Cependant, le matériau élastomère peut être sensible au fluage entraînant une diminution de la stabilité et de la rapidité du retour à l'état d'équilibre. La déformation en flexion des doigts des connecteurs peut aussi être minimale par rapport à un état de repos de chaque connecteur pour lequel un doigt est perpendiculaire au plan formé par les deux ou trois autres doigts. Un connecteur dont un doigt est perpendiculaire au plan des deux autres peut être un compromis entre stabilité et durabilité de l'état d'équilibre. Si nécessaire, la déformation en flexion de chaque doigt des connecteurs est minimale en tenant compte de tendeurs agissant entre deux connecteurs, entre un connecteur et un tube, ou entre deux tubes.

Dans un mode particulier de réalisation de la structure tridimensionnelle, les doigts des connecteurs se déforment en flexion en tenant compte d'un moyen de mise en précontrainte pourvu de moyens d'accrochage suivant une longueur inférieure à une longueur des tubes ou barres pour leur imposer une flexion lorsque les moyens d'accrochage sont attachés aux connecteurs.

L'invention s'étend à un connecteur pour connecter des tubes ou barres comprenant trois moyens de connexion rigides tenus par une base, caractérisé en ce que la base forme une pièce d'un seul tenant en matériau élastomère et comprend trois doigts auxquels les trois moyens de connexion rigides sont fixés, des moyens de retenue des tubes ou barres étant en prise avec les moyens de connexion rigides. Plus particulièrement, les doigts se déforment en flexion par rapport à un état de repos pour lequel les doigts sont coplanaires ou pour lequel un doigt est perpendiculaire au plan formé par les deux autres doigts.

D'autres avantages de l'invention apparaîtront à la lecture de la description de modes de réalisation illustrés par les dessins.
La figure 1 est une vue en perspective d'un connecteur à trois doigts coplanaires.
La figure 2 est une vue de dessus du connecteur de la figure 1.
La figure 3 est une vue en coupe du connecteur de la figure 1.
La figure 4 est une vue en perspective d'un connecteur à quatre doigts coplanaires.
La figure 5 est une vue en perspective d'un connecteur à trois doigts deux à deux perpendiculaires.
La figure 6 est une vue en perspective d'une structure tubulaire prismatique à l'état d'équilibre.
La figure 7 est une vue en perspective de la structure tubulaire prismatique de la figure 6 à l'état déformé.
La figure 8 est une vue en perspective d'un support publicitaire dont le cadre est la structure tubulaire prismatique de la figure 6.
La figure 9 est une vue en perspective d'une structure tubulaire prismatique précontrainte à l'état d'équilibre par une toile.
La figure 10 est une vue en perspective d'une structure tubulaire prismatique de la figure 9 à l'état déformé.
La figure 11 est une en perspective d'une structure tubulaire prismatique précontrainte à l'état d'équilibre par des sangles.
La figure 12 est une vue en perspective d'une barrière autoporteuse délimitant un jardin de glace, formée de plusieurs structures tubulaires tridimensionnelles connectées entre elles.
La figure 13 est une vue de face d'un connecteur et d'un moyen de retenue sous la forme d'un téton porté par une pièce à déformation élastique présentant une section circulaire ouverte.
La figure 14 est une vue en perspective du connecteur de la figure 13.
La figure 15 est une vue de face d'un connecteur et d'un moyen de retenue sous la forme d'une vis et d'un écrou.
La figure 16 est une vue en perspective du connecteur de la figure 15.
La figure 17 est une vue de face d'un connecteur et d'un moyen de retenue sous la forme d'une goupille à arceau montée sur un tube extérieur à un moyen de connexion.
La figure 18 est une vue en perspective du connecteur de la figure 17.
La figure 19 est une vue de face d'un connecteur et d'un moyen de retenue sous la forme d'une goupille à arceau montée sur un tube logé à l'intérieur d'un moyen de connexion.
La figure 20 est une vue en perspective du connecteur de la figure 19.
La figure 21 est une vue de face d'un connecteur et d'un moyen de retenue sous la forme d'une goupille à arceau montée sur une barre ayant un profil en croix et logée à l'intérieur d'un moyen de connexion.
La figure 22 est une vue en perspective du connecteur de la figure 21.

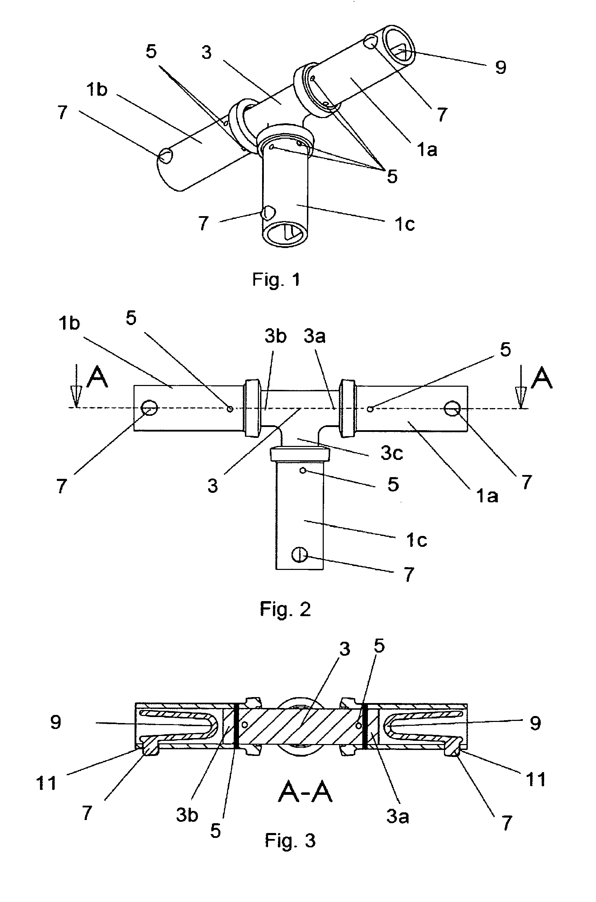

Figures 1 à 3, un connecteur pour assembler des tubes comprend trois moyens de connexion rigides 1 a, 1 b, 1 c, fabriqués par exemple dans un matériau thermoplastique. Chaque moyen de connexion 1a, 1b, 1c est fixé à un doigt 3a, 3b, 3c appartenant à une base 3 formant une seule pièce en matériau élastomère. Le connecteur est ici représenté à l'état de repos, dans lequel les trois doigts 3a, 3b, 3c de la base 3 sont coplanaires. Les trois moyens de connexion 1 a, 1 b, 1 c, sont fixés aux doigts 3a, 3b, 3c à l'aide d'une pièce de fixation, par exemple une goupille 5 traversant les moyens de connexion 1 a, 1 b, 1 c et les doigts 3a, 3b, 3c. Les doigts 3a, 3b, 3c ont une section circulaire pleine. Les moyens de connexion 1a, 1b, 1c ont une section circulaire tubulaire pour recevoir les doigts 3a, 3b, 3c. Chaque moyen de connexion 1 a, 1 b, 1 c est pourvu d'un moyen de retenue coopérant avec un tube, en l'occurrence un téton 7 porté par une pièce en U à déformation élastique 9 pour faire saillie hors du moyen de connexion à travers une ouverture 11. Le tube à accoupler est lui-même muni d'une ouverture pour permettre au téton de s'y insérer pour réaliser la connexion.

Dans l'exemple d'illustration, les tétons 9 sont tous orientés perpendiculairement au plan formé par les trois doigts dans l'état de repos du connecteur pour éviter une rotation des tubes dans la structure tubulaire tridimensionnelle. Toutefois, la base 3 d'un seul tenant en matériau élastomère peut si nécessaire accommoder une déformation en torsion de ses doigts pour un ou plusieurs des connecteurs participant au maintien de la structure tubulaire tridimensionnelle.

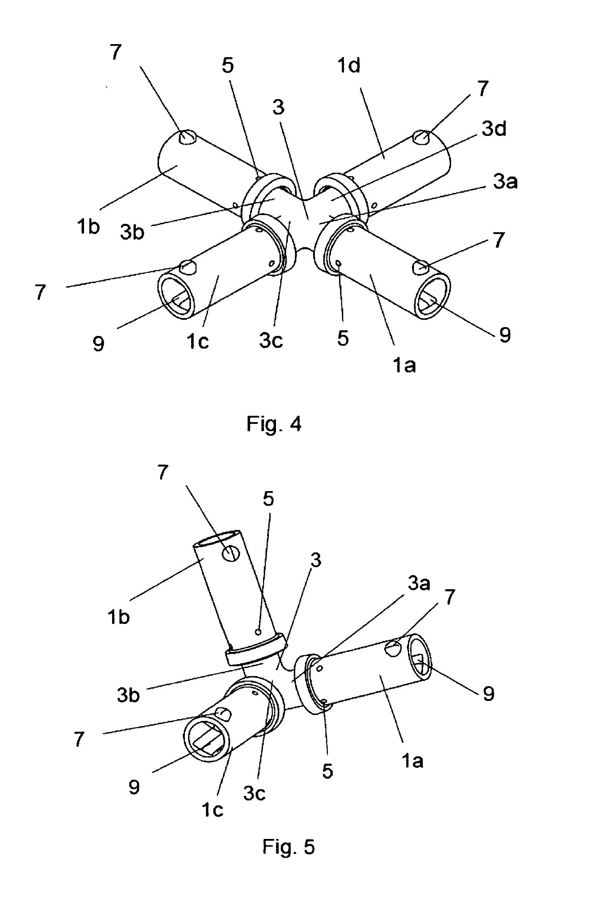

Figure 4, un connecteur pour assembler des tubes comprend quatre moyens de connexion coplanaires. Il est analogue en tout point au connecteur à trois moyens de connexion décrit précédemment, en dehors de posséder un quatrième moyen de connexion rigide 1 d. Ce dernier est fixé à un quatrième doigt 3d de la base 3 en matériau élastomère par une goupille 5. Le connecteur à quatre moyens de connexion illustré par la figure 4 permet d'assembler entre elles des structures tubulaires tridimensionnelles élémentaires.

Figure 5, un connecteur pour assembler des tubes comprend trois moyens de connexion. Il est analogue en tout point au connecteur à trois moyens de connexion décrit précédemment, en dehors du fait que les trois doigts 3a, 3b, 3c de la base 3 forment un triède où chaque doigt est perpendiculaire au plan formé par les deux autres. Ce connecteur à trois moyens de connexion permet de diminuer l'amplitude de la déformation en flexion d'un des doigts par rapport à la déformation en flexion du doigt homologue d'un connecteur à trois doigts coplanaires.

Comme indiqué précédemment, la base et ses trois ou quatre doigts est une pièce d'un seul tenant en matériau élastomère. Elle est fabriquée par injection dans un moule en deux parties. Le matériau élastomère est de préférence un polyuréthane et possède une dureté Shore A comprise entre 80 et 95. L'injection a lieu sous une pression comprise entre 600 et 800 bars et à une température de l'ordre de 200 °C.

La base permet une déformation des doigts dans n'importe quelle direction par rapport à l'état de repos du connecteur. Ainsi, le connecteur selon l'invention est universel en ce qu'il s'adapte à n'importe quel noeud d'une structure tubulaire tridimensionnelle. Les moyens de connexion rigides garantissent une tenue ferme avec les tubes de la structure tubulaire tridimensionnelle.

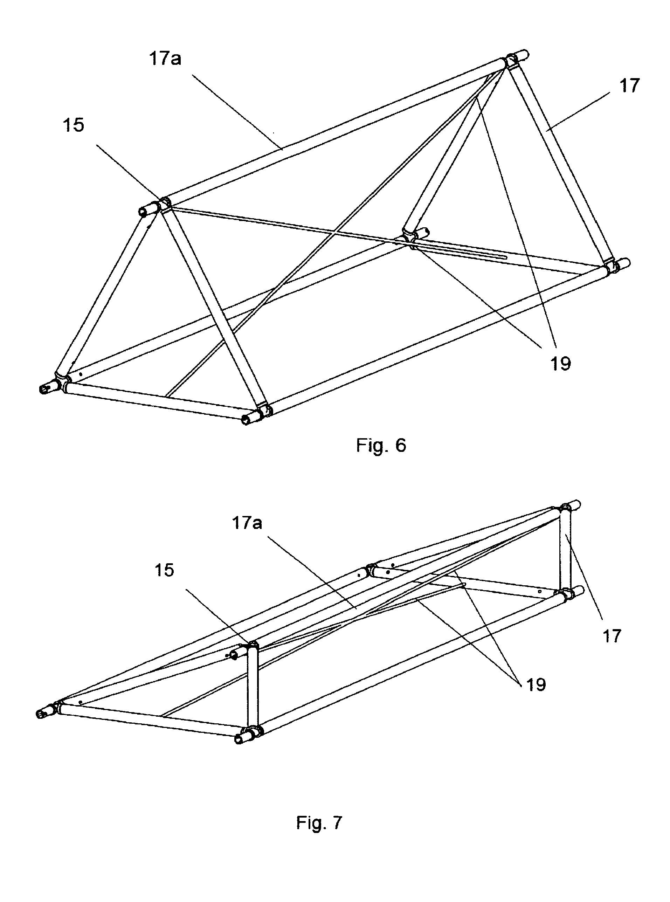

Figure 6, l'assemblage de six connecteurs 15 et de neuf tubes 17 aboutit à une structure tubulaire tridimensionnelle élémentaire en forme de prisme. On vérifie l'égalité 2*9 = 6*3, c'est-à-dire que les connecteurs réalisent au total un nombre de connexions égal au double du nombre de tubes. Trois des moyens de connexion de chaque connecteur pointent dans trois directions non coplanaires. Chaque connecteur tend à minimiser une déformation en flexion des doigts par rapport à l'état au repos du connecteur où les quatre doigts sont coplanaires et deux à deux perpendiculaires. La déformation en flexion est forte pour deux doigts opposés alignés suivant une même direction et faible pour les deux autres doigts alignés perpendiculairement. La minimisation de la déformation de chaque connecteur tient compte de l'action mutuelle des connecteurs agissant par l'intermédiaire des neuf tubes. La structure tubulaire prismatique est ainsi autoporteuse et à l'état d'équilibre.

Comme indiqué dans l'introduction, la flexion des doigts des connecteurs permet à la structure tubulaire prismatique de se déformer. Dans l'exemple de la figure 7, une force F appliquée parallèlement au tube de faîtage 17a entraîne une déformation de la structure qui tend à abaisser le tube de faîtage en supposant la structure fixée au sol. Lorsque la force F cesse, la structure tubulaire prismatique retourne vers son état d'équilibre par l'effet de la minimisation de la déformation en flexion des doigts de chaque connecteur, compte tenu de leurs actions mutuelles par l'intermédiaire des tubes. Avantageusement, il est prévu de tendre des tendeurs élastiques 19 entre un connecteur 15 et un tube 17 pour contribuer au retour à l'équilibre de la structure.

La capacité de déformation de la structure tubulaire tridimensionnelle est particulièrement intéressante lorsqu'elle est utilisée comme barrière autoporteuse, par exemple sur des stades ou des patinoires. En cas de choc, la structure tubulaire tridimensionnelle se déforme par la flexion élastique des doigts des connecteurs et revient ensuite à l'équilibre.

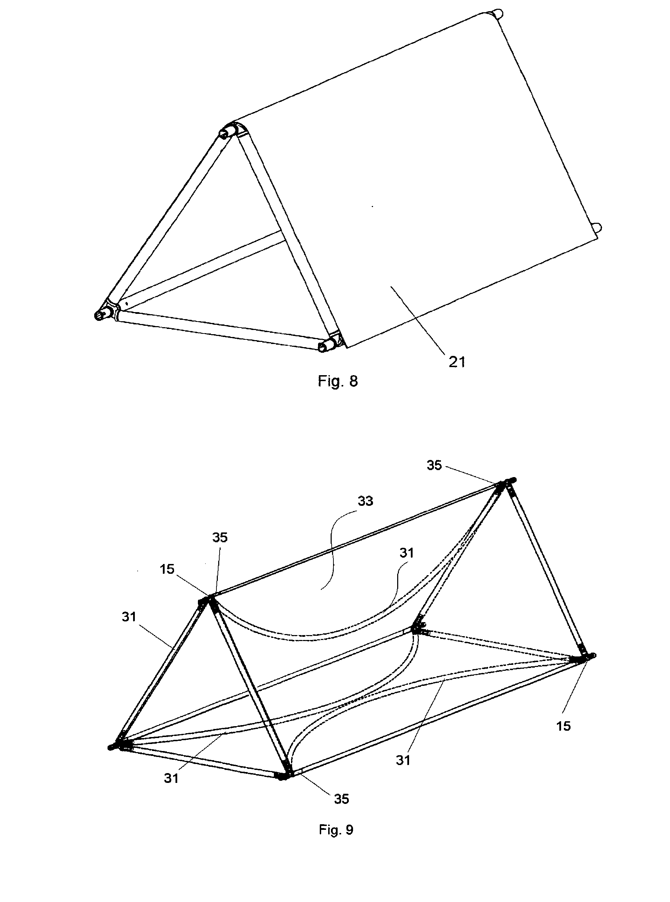

Figure 8, une toile 21 est tendue sur la structure tubulaire tridimensionnelle illustrée par la figure 7. La toile 21 est imprimée pour conférer à la barrière autoporteuse une fonction complémentaire de support publicitaire.

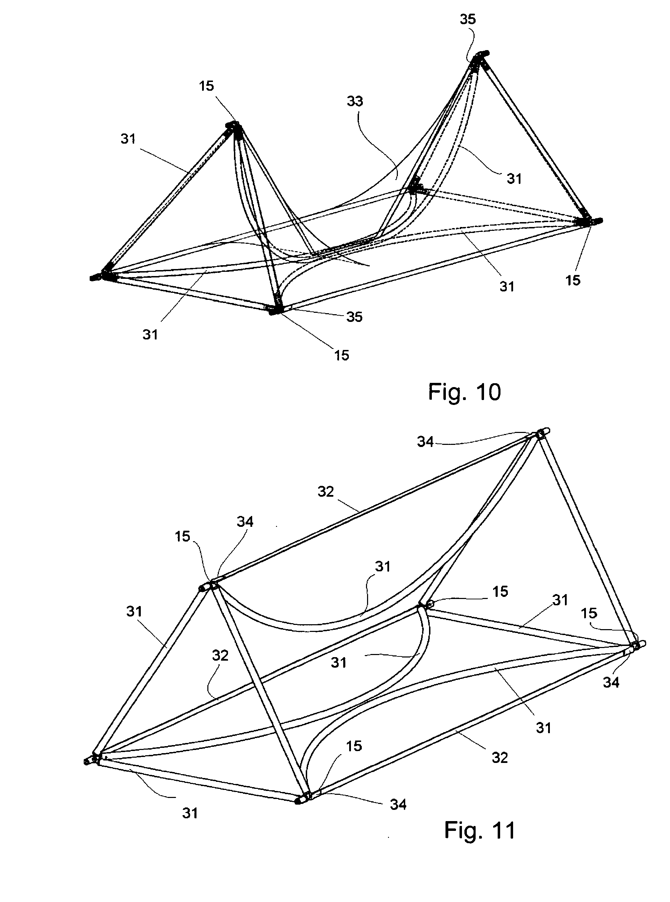

Figure 9, une structure tubulaire prismatique comprend, comme dans le cas des figures 6 et 7, un assemblage de six connecteurs 15 et de neuf tubes 31. Une toile 33 est également tendue sur la structure, comme dans le cas de la figure 8. Cependant, la longueur de la toile 33 est plus faible que la longueur des tubes 31 avant leur assemblage dans la structure tubulaire. Des moyens d'accrochage 35 s'étendant suivant cette longueur permettent d'attacher cette dernière aux connecteurs 15, en les rapprochant à la longueur de la toile 33. Cette opération d'accrochage impose une flexion des tubes 31 suivant leur longueur. La toile 33 précontraint ainsi la structure dans son état d'équilibre et cet état précontraint est permis par un surcroît de déformation en flexion des doigts des connecteurs 15. Il en résulte une meilleure tension de la toile 33 sur la structure et une meilleure aptitude à la déformation en cas de chute d'une personne sur la structure, comme illustré par la figure 10.

La structure tubulaire tridimensionnelle illustrée par la figure 11 se distingue de la celle illustrée par la figure 9 en ce que la flexion des tubes 31 suivant leur longueur est imposée par des sangles 32 dont la longueur est plus faible que la longueur des tubes 31 avant leur assemblage dans la structure tubulaire. Les sangles 32 sont accrochées aux connecteurs 15 par des moyens d'accrochage 34 pour ainsi pré-contraindre la structure dans son état d'équilibre. Là encore, cet état précontraint est permis par un surcroît de déformation en flexion des doigts des connecteurs 15.

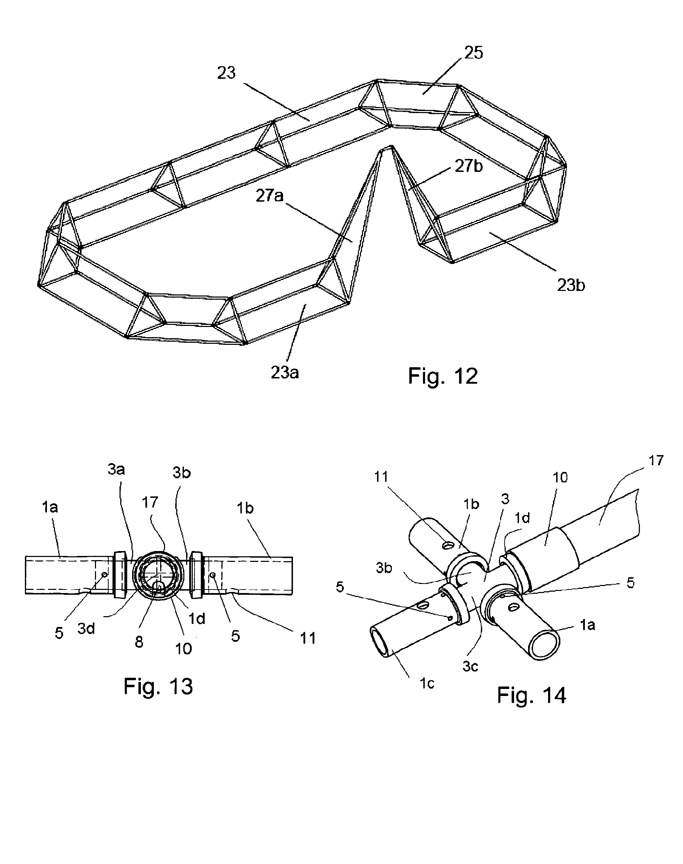

Figure 12, un jardin de glace est délimité par une barrière autoporteuse comprenant onze structures tubulaires tridimensionnelles en prisme droit 23 ou tronqué 25, connectées les unes aux autres par des connecteurs à quatre moyens de connexion. Deux prismes droits 23a, 23b sont connectés à deux éléments de portique 27a, 27b par des connecteurs à quatre moyens de connexion. Les deux éléments de portique 27a, 27b sont reliés entre eux par deux connecteurs à quatre moyens de connexion également. La toile représentée par la figure 8, imprimée pour servir de support publicitaire, peut être tendue sur chaque prisme de la barrière autoporteuse illustrée par la figure 8.

Dans les modes d'exécution décrits précédemment, le moyen de retenue des tubes par rapport aux moyens de connexion rigides était un téton porté par une pièce en U à déformation élastique. Les figures 13 à 20 illustrent d'autres moyens de retenue.

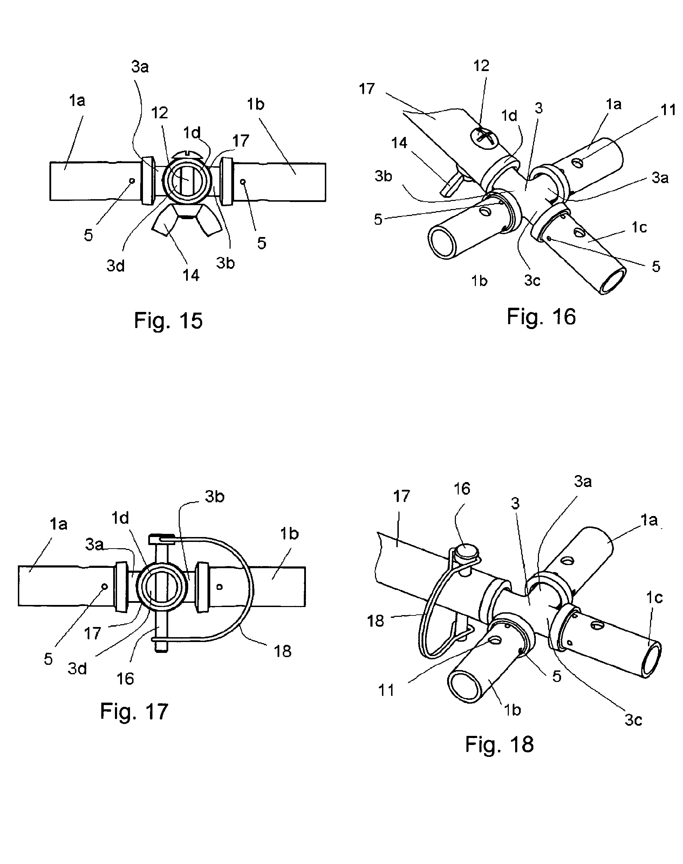

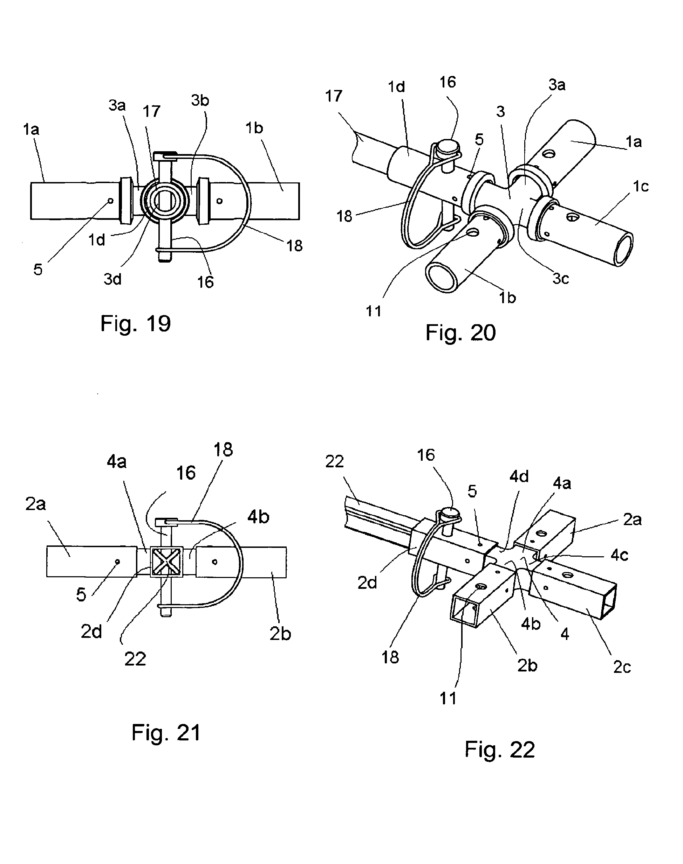

Figure 13 et 14, un téton 8 est porté par une pièce à déformation élastique 10 présentant une section circulaire ouverte. Cette pièce 10 se monte autour du tube à retenir 17 en insérant le téton 8 à travers l'ouverture 11 prévue dans le moyen de connexion rigide 1d. Figure 15 et 16, le moyen de retenue du tube 17 est une vis 12 traversant le moyen de connexion rigide 1 d et maintenue en position par un écrou 14. Figures 17 à 20, le moyen de retenue est une goupille 16 traversant le moyen de connexion rigide 1 d et maintenue en position par un arceau 18. Le tube 17 est monté soit à l'extérieur du moyen de connexion rigide 1 d, figures 17 et 18, soit à l'intérieur, figures 19 et 20.

L'invention a été jusqu'ici décrite avec des tubes 17,31, des moyens de connexion rigides 1a-1d et des doigts en matériau élastomère 3a-3d de section circulaire. Cependant, elle n'est pas limitée à ces exemples de réalisation. Les figures 21 et 22 illustrent ainsi un mode de réalisation dans lequel les doigts en matériau élastomère 4a-4d et les moyens de connexion rigides 2a-2d ont une section rectangulaire tandis que les tubes sont remplacés par des barres 22 ayant un profil en croix, montées à l'intérieur desdits moyens de connexion rigides 2a-2d. Une goupille 16 traversant le moyen de connexion rigide 2d et la barre 22 est maintenue en position par un arceau 18.

Les moyens de retenue venant en prise avec les moyens de connexion rigides, ils offrent une retenue solide et sure, notamment en cas de déformation de la structure tridimensionnelle, tout en restant rapides à fermer ou à ouvrir pour permettre une connexion et une déconnexion faciles des tubes de la structure lors de son montage et de son démontage.

Dans les exemples d'illustration, les tubes ou barres sont d'une seule pièce. Par commodité, il est envisageable de former un tube ou une barre par la réunion de deux, voire de plusieurs tubes ou barres plus courts. Cependant, si la réunion de deux tubes ou de deux barres courts est assurée par un connecteur ne comportant que deux moyens de connexion, voire par simple emmanchement sans connecteur, les deux tubes ou barres ainsi réunis ne compteront que pour un tube ou barre dans la structure tridimensionnelle. Autrement dit, les N tubes ou barres de la structure sont définis par le fait qu'ils sont connectés les uns aux autres par des connecteurs qui selon l'invention comprennent au moins trois moyens de connexion rigides.

L'invention divulgue une structure tridimensionnelle qui est à la fois autoporteuse, déformable et modulable. Elle trouve une application particulièrement intéressante en tant que barrière où la déformabilité augmente la sécurité en cas de chute d'une personne sur la barrière. Le connecteur est d'une fabrication économique, notamment dans sa configuration à trois ou quatre doigts coplanaires.

## Revendications

1. Structure tridimensionnelle comprenant N tubes ou barres (17,31,22) connectés par des connecteurs (15) comprenant chacun trois moyens de connexion rigides (1a-1c,2a-2c) tenus par une base (3,4) et réalisant au total un nombre de connexions égal à 2N, **caractérisée en ce que** la base (3,4) forme une pièce d'un seul tenant en matériau élastomère et comprend trois doigts (3a-3c,4a-4c) auxquels les trois moyens de connexion rigides (1a-1c,2a-2c) sont fixés et **en ce que** chaque connecteur (15) tend à minimiser une déformation en flexion des doigts (3a-3c,4a-4c) de la base (3) en tenant compte de tous les connecteurs agissant les uns sur les autres par l'intermédiaire des N tubes ou barres (17,31,22) connectés par des moyens de retenue (7,9; 8,10; 12,14; 16,18) en prise avec les moyens de connexion rigides (1a-1c).

2. Structure tridimensionnelle selon la revendication 1, **caractérisée en ce que** chaque connecteur (15) comprend un quatrième moyen de connexion rigide (1 d,2d) fixé à un quatrième doigt (3d,4d) de la base (3,4) et **en ce que** chaque connecteur (15) tend à minimiser une déformation en flexion des doigts (3a-3d,4a-4d) de la base (3,4) en tenant compte de tous les connecteurs agissant les uns sur les autres par l'intermédiaire des N tubes ou barres (17,31,22) connectés aux connecteurs par les moyens de connexion rigides (1a-1d,2a-2d).

3. Structure tridimensionnelle selon la revendication 1 ou 2, **caractérisée en ce que** les doigts (3a-3d,4a-4d) des connecteurs se déforment en flexion par rapport à un état de repos de chaque connecteur pour lequel les trois ou quatre doigts sont coplanaires.

4. Structure tridimensionnelle selon la revendication 1 ou 2, **caractérisée en ce que** les doigts (3a-3d) des connecteurs se déforment en flexion par rapport à un état de repos de chaque connecteur pour lequel un doigt (3a) est perpendiculaire au plan formé par les deux (3b,3c) ou trois autres doigts.

5. Structure tridimensionnelle selon la revendication 1 ou 2, **caractérisée en ce que** les doigts (3a-3d) des connecteurs se déforment en flexion en tenant compte de tendeurs (19) agissant entre deux connecteurs (15), entre un connecteur (15) et un tube ou barre (17), ou entre deux tubes ou barres (17,31,22).

6. Structure tridimensionnelle selon la revendication 1 ou 2, **caractérisée en ce que** les doigts (3a-3d,4a-4d) des connecteurs se déforment en flexion en tenant compte d'un moyen de mise en précontrainte (33,32) pourvu de moyens d'accrochage (35,34) suivant une longueur inférieure à une longueur des tubes ou barres (17,31,22) pour leur imposer une flexion lorsque les moyens d'accrochage (35,34) sont attachés aux connecteurs (15).

7. Structure selon la revendication 6, **caractérisée en ce que** le moyen de précontrainte est une toile (33) ou une sangle (32).

8. Connecteur (15) pour connecter des tubes ou barres comprenant trois moyens de connexion rigides (1a-1c,2a-2c) tenus par une base (3,4), **caractérisé en ce que** la base (3,4) forme une pièce d'un seul tenant en matériau élastomère et comprend trois doigts (3a-3c,4a-4c) auxquels les trois moyens de connexion rigides (1a-1c,2a-2c) sont fixés, des moyens de retenue (7,9 ; 8,10 ; 12,14 ; 16.18) des tubes ou barres étant en prise avec les moyens de connexion rigides (1a-1c, 2a-2c).

9. Connecteur selon la revendication 8, **caractérisé en ce que** les moyens de retenue comprennent un téton (7) porté par une pièce à déformation élastique en U (9) ou présentant une section circulaire ouverte (10), une vis (12) traversant le moyen de connexion rigide et maintenue en position par un écrou (14), ou une goupille (16) traversant le moyen de connexion rigide et maintenue en position par un arceau (18).

10. Connecteur selon la revendication 8, **caractérisé en ce que** les doigts (3a-3d,4a-4d) se déforment en flexion par rapport à un état de repos pour lequel les doigts sont coplanaires.

11. Connecteur selon la revendication 8, **caractérisé en ce que** les doigts (3a-3d) se déforment en flexion par rapport à un état de repos pour lequel un doigt (3a) est perpendiculaire au plan formé par les deux (3b,3c) autres doigts.

## Patentansprüche

1. Dreidimensionale Struktur mit N Rohren oder Stangen (17, 31, 22), die durch Steckverbinder (15) verbunden werden, die jeweils drei durch eine Basis (3, 4) verbundene steifen Verbindungseinrichtungen (1a-1c, 2a-2c) umfassen, die eine Gesamtzahl der Verbindungen gleich 2N bilden, **dadurch gekennzeichnet, dass** die Basis (3, 4) aus einem integralen Teil aus Elastomer besteht und weist drei Finger (3a-3c, 4a-4c) auf, an denen die drei steifen Verbindungseinrichtungen (1a-1c, 2a-2c) angebracht werden und dass jeder Steckverbinder (15) sucht danach, eine Biegeverformung der Finger (3a-3c, 4a-4c) der Basis (3) zu minimieren, unter der Bedingung, dass alle die Steckverbinder durch die N Rohre oder Stangen (17, 31, 22) aufeinander einwirken, die durch Haltemittel (7, 9, 8, 10, 12, 14, 16, 18), die mit den steifen Verbindungseinrichtungen (1a-1c) im Eingriff stehen, verbunden werden.

2. Dreidimensionale Struktur nach Anspruch 1, **dadurch gekennzeichnet, dass** jeder Steckverbinder (15) eine vierte steife Verbindungseinrichtung (1d, 2d) aufweist, die an einem vierten Finger (3d, 4d) der Basis (3, 4) angebracht wird und dass jeder Steckverbinder (15) sucht danach, eine Biegeverformung der Finger (3a-3d, 4a-4d) der Basis (3, 4) zu minimieren, unter der Bedingung, dass alle die Steckverbinder durch die von den steifen Verbindungseinrichtungen (1a-1d, 2a-2d) verbundenen N Rohre oder Stangen (17, 31, 22) aufeinander einwirken.

3. Dreidimensionale Struktur nach Anspruch 1 oder 2, **dadurch gekennzeichnet, dass** die Finger (3a-3d, 4a-4d) der Steckverbinder sich in Biegung verformen bezüglich eines Ruhezustandes jedes Steckverbinders in dem die drei oder vier Finger koplanar sind.

4. Dreidimensionale Struktur nach Anspruch 1 oder 2, **dadurch gekennzeichnet, dass** die Finger (3a-3d) der Steckverbinder sich in Biegung verformen bezüglich eines Ruhezustandes jedes Steckverbinders in dem ein Finger (3a) senkrecht auf die von den beiden (3b, 3c) oder dreien anderen Fingern gebildete Ebene steht.

5. Dreidimensionale Struktur nach Anspruch 1 oder 2, **dadurch gekennzeichnet, dass** die Finger (3a-3d) der Steckverbinder sich in Biegung verformen, unter der Bedingung, dass Spanner (19) auf zwei Steckverbinder (15), oder auf einen Steckverbinder (15) und ein Rohr oder eine Stange (17), oder auf zwei Rohre oder Stangen (17, 31, 22) einwirken.

6. Dreidimensionale Struktur nach Anspruch 1 oder 2, **dadurch gekennzeichnet, dass** die Finger (3a-3d, 4a-4d) der Steckverbinder sich in Biegung verformen, unter der Wirkung einer Vorspanneinrichtung (33, 32), die Befestigungsmittel (35, 34) entlang einer Länge besitzt, die kürzer ist als die Länge der Rohre oder Stangen (17, 31, 22), um die Rohre oder Stangen sich in Biegung verformen zu zwingen, wenn die Befestigungsmittel (35, 34) an den Steckverbinder (15) angebracht werden.

7. Dreidimensionale Struktur nach Anspruch 6, **dadurch gekennzeichnet, dass** die Vorspanneinrichtung aus einem Stoff (33) oder einem Band (32) besteht.

8. Steckverbinder (15), um Rohre oder Stangen zu verbinden, der drei durch eine Basis (3, 4) verbundene steifen Verbindungseinrichtungen (1a-1 c, 2a-2c) umfasst, **dadurch gekennzeichnet, dass** die Basis (3, 4) aus einem integralen Teil aus Elastomer besteht und weist drei Finger (3a-3c, 4a-4c) auf, an denen die drei steifen Verbindungseinrichtungen (1a-1 c, 2a-2c) angebracht werden und dass Haltemittel (7, 9, 8, 10, 12, 14, 16, 18) der Rohre oder Stangen mit den steifen Verbindungseinrichtungen (1a-1c, 2a-2c) im Eingriff stehen.

9. Steckverbinder nach Anspruch 8, **dadurch gekennzeichnet, dass** die Haltemittel einen Knopf (7) umfassen, der von einen elastischen Teil getragen wird, der eine U-Form (9) oder einen offenen kreisförmigen Querschnitt (10) besitzt, oder eine Schraube (12) umfassen, die durch die steife Verbindungseinrichtung dringt und von einer Mutter (14) im Position gehalten wird, oder einen Stift (16) umfassen, der durch die steife Verbindungseinrichtung dringt und von einem Bügel (18) im Position gehalten wird.

10. Steckverbinder nach Anspruch 8, **dadurch gekennzeichnet, dass** die Finger (3a-3d, 4a-4d) sich in Biegung verformen bezüglich eines Ruhezustandes in dem die Finger koplanar sind.

11. Steckverbinder nach Anspruch 8, **dadurch gekennzeichnet, dass** die Finger (3a-3d) sich in Biegung verformen bezüglich eines Ruhezustandes in dem ein Finger (3a) senkrecht auf die von den beiden anderen Fingern (3b, 3c) gebildete Ebene steht.

## Claims

1. Three dimensional structure comprising N tubes or bars (17, 31, 22) connected by connectors (15) each comprising three rigid connection means (1a-1c, 2a-2c) held by a base (3, 4) and performing a total number of connections equal to 2N, **characterised in that** the base (3, 4) forms an integral part of elastomer and comprises three fingers (3a-3c, 4a-4c) to which the three rigid connection means (1a-1c, 2a-2c) are attached and **in that** each connector (15) tends to minimize a bending of the fingers (3a-3c, 4a-4c) of the base (3) with the condition that the connectors all act on each other through the N tubes or bars (17, 31, 22) connected by retaining means (7, 9, 8, 10, 12, 14, 16, 18) engaging the rigid connection means (1a-1c).

2. Three dimensional structure according to claim 1, **characterised in that** each connector (15) comprises a fourth rigid connecting means (1d, 2d) attached to a fourth finger (3d, 4d) of the base (3, 4) and **in that** each connector (15) tends to minimize a bending of the fingers (3a-3d, 4a-4d) of the base (3, 4) with the condition that the connectors all act on each other through the N tubes or bars (17, 31, 22) connected to the connectors by the rigid connection means (1 a-1 d, 2a-2d).

3. Three dimensional structure of claim 1 or 2, **characterised in that** the fingers (3a-3d, 4a-4d) of the connectors bend with respect to a state of rest of each connector in which the three or four fingers are coplanar.

4. Three dimensional structure according to claim 1 or 2, **characterised in that** the fingers (3a-3d) of the connectors bend with respect to a state of rest of each connector in which a finger (3a) is perpendicular to the plane formed by the other two (3b, 3c) or three fingers.

5. Three dimensional structure according to claim 1 or 2, **characterised in that** the fingers (3a-3d) of the connectors bend with the condition that tensioners (19) act between two connectors (15), or between a connector (15) and a tube or bar (17), or between two tubes or bars (17, 31, 22).

6. Three dimensional structure of claim 1 or 2, **characterised in that** the fingers (3a-3d, 4a-4d) of the connectors bend with the condition that a pre-tensioning means (33, 32) is provided with attachment means (35, 34) along a length shorter than a length of the tubes or bars (17, 31, 22) for bending said tubes or bars when the attachment means (35, 34) are attached to the connectors (15).

7. Three dimensional structure according to claim 6, **characterised in that** the pre-tensioning means is a canvas (33) or a strap (32).

8. Connector (15) to connect tubes or bars, comprising three rigid connection means (1 a-1 c, 2a-2c) held by a base (3, 4), **characterised in that** the base (3, 4) is an integral part of elastomer and comprises three fingers (3a-3c, 4a-4c) to which the three rigid connection means (1a-1c, 2a-2c) are attached and **in that** retaining means (7, 9, 8, 10, 12, 14, 16, 18) of the tubes or bars engage the rigid connection means (1 a-1 c, 2a-2c).

9. Connector according to claim 8, **characterised in that** the retaining means comprise a button (7) carried by an elastic part which has a U shape (9) or an open circular section (10), or a screw (12) extending through the rigid connection means and held in position by a nut (14), or a pin (16) extending through the rigid connection means and maintained in position by a hoop (18).

10. Connector according to claim 8, **characterised in that** the fingers (3a-3d, 4a-4d) bend with respect to a state of rest in which the fingers are coplanar.

11. Connector according to claim 8, **characterised in that** the fingers (3a-3d) bend with respect to a state of rest in which a finger (3a) is perpendicular to the plane formed by the other two (3b, 3c) fingers.
